# EUROPEAN PATENT APPLICATION

(11) **EP 2 573 996 A1**
(43) Date of publication of application: **27.03.2013**
(21) Application number: 10851669.1
(22) Date of filing: 22.12.2010
(51) Int. Cl.: H04L 29/06

(54) **SYSTEM FOR MERGING SERVICES AND SERVICE IMPLEMENTING METHOD THEREOF**

(30) Priority: 20.05.2010 CN 201010179928
(71) Applicant: ZTE Corporation, Shenzhen, Guangdong 518057 (CN)
(72) Inventor: WANG, Fenglai, Shenzhen Guangdong 518057 (CN); DING, Yan, Shenzhen Guangdong 518057 (CN); ZHU, Kezhi, Shenzhen Guangdong 518057 (CN); ZOU, Yan, Shenzhen Guangdong 518057 (CN)
(74) Representative: Novagraaf Technologies
(86) International application number: PCT/CN2010/080124
(87) International publication number: WO 2011/143912

(57) **Abstract**

The present invention provides a convergence service system, comprising: a Resource Management Subsystem (RMS), an Operation Management Subsystem (OMS), a Service Engine Subsystem (SES) and a User Portal Subsystem (UPS). The present invention still provides a method for implementing convergence service accordingly, the method comprising: the RMS edits an introduced original resource to acquire a resource metadata, synchronizes the resource metadata to the OMS after arranging the metadata, and synchronizes the resource metadata arrangement information to the UPS; the OMS implements data synchronization for the SES, and the UPS provides a corresponding user portal for the user; the convergence service system provides the service for the user. Through loosely coupling the resource and the operation in a multi-network service system, dividing the resource and the operation into two dimensions, namely, the resource management and the operation management which are correspondingly independent, the present invention realizes the cross-network convergence service for conveniently sharing the resource, and realizes the unified operation of the multi-network services for conveniently developing the cross-network deep-level convergence service.

## Description

### Field of the Invention

The present invention relates to the convergence service field, and in particular to a convergence service system and a service implementing method thereof.

### Background of the Invention

At present, the development of the Internet Protocol (IP) technology makes it be possible to unify original multiple service sub-networks to be a merged multi-service network, and the service markets of the telecommunication network, the Internet and the cable television network begin to be merged.

However, in the conventional art, resource and operation of the same service are uniformly managed, and the access, resources and operations of different network services are independently managed. Thus, for normal users, it is necessary to have the permission for accessing the network service resource when needing to use different network services; and for the operators, different network services need to establish each independent management system, and then the following problems may exist:
1) Tight coupling of resource display and service operation. The change of the resource and the change of the service operation strategy are mutually influenced; for the constantly-changed information resource, and the relation of the tight coupling is quite hard to support the flexible and changeable cross-network convergence service.
2) It is inconvenient to share the resource. The telecommunication network, the Internet and the cable television network contain a great number of resource information, such as the information type data, images, audios and videos, monitoring devices, sensors, and the like. As the information is distributed on different networks, the implementation of cross-network service access needs to define a set of mutually-accessible standards. Such a set of standards not only needs to consider the specific application scenes of different network services, but also needs to adapt the development of the cross-network convergence service, thus it is quite difficult to be actually implemented, which creates a barrier for the interconnection and intercommunication of the multi-network service resource.
3) The operation and management are mutually independent, and the unified operation for the multi-network service cannot be implemented. The operation management provides core functions such as service management, service charging, service certification, service authentication and the like for the operators or service suppliers. The independent management of the operation brings lots of difficulties for the spreading and development of the cross-network convergence service, and services over different networks are hard to implement unified management, unified charging, unified certification and unified authentication.
4) It is inconvenient for the development of the cross-network deep-level convergence service. In the above, the cross-network deep-level convergence service refers to the application scenes such as cross-network ordering, cross-network collection, displacement television and the like. The cross-network ordering refers to one-network-ordering and multi-network-watching, for example, to order on a mobile phone, and to use on an Internet Protocol Television (IPTV), The cross-network collection refers to one-network-collection and multi-network-watching, for example, to collect on the IPTV, and to use on the mobile phone. The displacement television refers that the continuous play of the same video can be implemented between different terminals. This type of services are on the basis of sharing resources, and need to implement unified management for the multi-network resources, so as to realize the seamless use of the cross-network convergence service.

### Summary of the Invention

For that reason, the main purpose of the present invention is to provide a convergence service system and a service implementing method thereof, which can realize the cross-network convergence service for conveniently sharing resources, and can implement the unified operation of the multi-network service for conveniently developing the cross-network deep-level convergence service.

In order to achieve the purpose, the technical scheme of the present invention is implemented below:
a convergence service system comprises a Resource Management Subsystem (RMS), an Operation Management Subsystem (OMS), a Service Engine Subsystem (SES) and a User Portal Subsystem (UPS); wherein,
the RMS is configured to take charge of the management of a multi-network service resource, comprises steps of: introducing an original resource; editing the introduced original resource to acquire a resource metadata, arranging the edited resource metadata, synchronizing the resource metadata to the OMS, and synchronizing the resource metadata arrangement information to the UPS;
the OMS is configured to establish an associated relation between a product metadata and the resource metadata after the RMS synchronizes the resource metadata to the OMS, and then synchronize the resource metadata to the SES;
the SES is configured to provide the service capacity access, so as to realize distribution and scheduling of the service and the global load balance;
the UPS is configured to provide a corresponding user portal for the user according to the resource metadata arrangement information which is synchronized by the RMS and a user terminal type.

The resource metadata acquired by the RMS comprises two characteristics which are a single-network service and a multi-network service.

The RMS is further configured to package the acquired resource metadata, and synchronize the packaged resource metadata to the OMS.

The RMS is further configured to verify the resource metadata and the resource metadata arrangement information, if the verification is successful, implementing the following synchronization flow; otherwise, re-editing the original resource.
the UPS is further configured to receive a service utilization request from the user, and notify the SES;
the SES is further configured to load the service utilization request to a corresponding service engine thereof, and make the service engine request certification and authentication from the OMS; if the certification and authentication are successful, making the service engine provide service for the user;
the OMS is further configured to implement the corresponding certification and authentication and return the certification and authentication response according to the request of the service engine in the SES.

The OMS is further configured to take charge of the management for the multi-network service operation, including charging management of the service, and the certification and authentication of the service.

A convergence service implementing method comprises:
after editing the introduced original resource to acquire the resource metadata, and arranging the resource metadata, the RMS of the convergence service system synchronizes the resource metadata to the OMS of the convergence service system, and synchronizes the resource metadata arrangement information to the UPS of the convergence service system;
the OMS implements data synchronization for the SES of the convergence service system according to the resource metadata which is synchronized by the RMS, the UPS provides the corresponding user portal for the user according to the resource metadata arrangement information which is synchronized by the RMS and the user terminal type;
the convergence service system provides service for the user when the user initiates the service utilization request on the user portal.

The resource metadata comprises two characteristics which are the single-network service and the multi-network service.

After the RMS acquires the resource metadata, the method further comprises: the RMS packages the acquired resource metadata,
the step of synchronizing the resource metadata to the OMS comprises: synchronizing the packaged resource metadata to the OMS.

Before the RMS implements the data synchronization, the method further comprises: the RMS verifies the resource metadata and the resource metadata arrangement information, if the verification is successful, implementing the following synchronization flow; otherwise, re-editing the original resource.

The step of the convergence service system provides service for the user comprises:
the UPS notifies the SES after receiving the service utilization request from the user;
the SES loads the service utilization request to the corresponding service engine;
the service engine requests certification and authentication from the OMS;
the service engine provides service for the user if the certification and authentication are successful.

The method further comprises: the OMS takes charge of the management for the multi-network service operation, wherein the management comprises charging management of the service, and the certification and authentication of the service.

The convergence service system and the service implementing method thereof provided by the present invention make the resource and operation in the multi-network service system be loosely coupled, and divide the resource and the operation into two dimensions, namely, the resource management and the operation management. The resource management takes charge of the introduction, edition, arrangement in the corresponding service system and the like for the resource in the cross-network convergence service system. The operation management takes charge of the management for service charging, service certification and service authentication implemented by the operators or the service suppliers. The resource management and the operation management respectively take resource and product as the management metadata. The associated relation between the resource metadata packet generated by packaging the resource metadata and the product metadata is a link for associating the resource management and the operation management. The resource metadata is uniformly managed by the resource management dimension, and provides flexible service experience for the user via flexible edition and arrangement. The product metadata is uniformly managed by the operation management dimension, and provides rich service strategies for the operators or the service provider, thereby, the resource management and the operation management can be correspondingly independent, meanwhile, the unified resource management and unified operation management can be provided for the multi-network convergence service. The present invention implements the cross-network convergence service for conveniently sharing resources, and implements the unified operation of the multi-network service for conveniently developing the cross-network deep-level convergence service by loosely coupling the resource and operation in the multi-network service system, and dividing them into two dimensions, namely, the resource management and the operation management which are correspondingly independent.

### Brief Description of the Drawings

Fig.1 shows a structural diagram of a convergence service system according to an embodiment of the present invention;
Fig.2 shows a diagram of the function and the specific structure of each subsystem of the convergence service system according to an embodiment of the present invention;
Fig.3 shows a flow diagram of a convergence service implementing method according to an embodiment of the present invention;
Fig.4 shows a specific flow diagram of Step 301 in Fig.3;
Fig.5 shows a flow diagram illustrating the OMS implements data synchronization for the SES according to the resource metadata which is synchronized by the RMS according to an embodiment of the present invention; and
Fig. 6 shows a flow diagram illustrating the convergence service system provides service for the user according to an embodiment of the present invention.

### Detailed Description of the Embodiments

The main idea of the invention is that: the resource and operation in the multi-network service system are loosely coupled, and are divided into two dimensions, namely, the resource management and the operation management. The resource management takes charge of the introduction, edition, arrangement in the corresponding service system and the like for the resource in the cross-network convergence service system. The operation management takes charge of the management for service charging, service certification and service authentication by the operators or the service suppliers. The resource management and the operation management respectively take the resource and the product as the management metadata. The associated relation between the resource metadata packet generated by packaging the resource metadata and the product metadata is the link for associating the resource management and the operation management. The resource metadata is uniformly managed by the resource management dimension, and provides the flexible service experience for the user via flexible edition and arrangement. The product metadata is uniformly managed by the operation management dimension, and provides rich service strategies for the operators or the service provider, thus, the resource management and the operation management can be correspondingly independent. Meanwhile, the unified resource management and unified operation management can be provided for the multi-network convergence service, so as to solve the problem that the resource is hard to share, the resource management and operation management are decentralized, the multi-network service is hard to merge and the like caused by the tight coupling of the resource display and service operation in the conventional multi-network convergence service system.

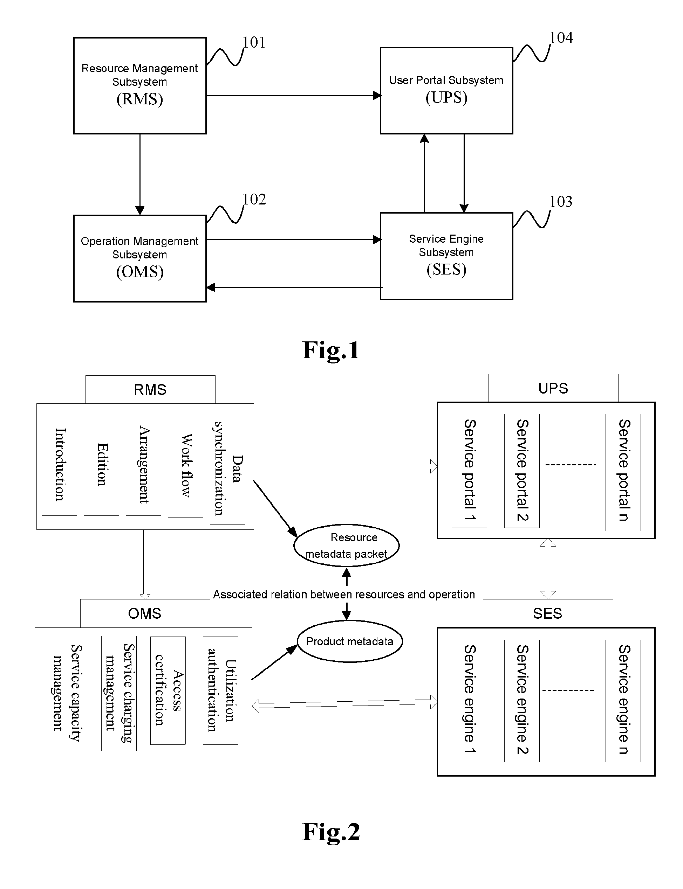

Fig. 1 shows a structural diagram of a convergence service system according to an embodiment of the present invention; as shown in Fig. 1, the convergence service system in the embodiment comprises the RMS 101, the OMS 102, the SES 103 and the UPS 104; wherein,
the RMS 101 is configured to take charge of the management for the multi-network service resource, the management comprising: introducing the original resource from different networks, editing the introduced original resource, arranging and managing the resource, managing the resource work flow, synchronizing the resource data, and the like. The functions and specific structures of each subsystem of the convergence service system of the embodiment are shown in Fig. 2.

In particular, for the RMS 101, the unified management of resource is on the basis of introducing the original resource to the RMS from different networks, wherein the original resource comprises the information in the multi-network service such as the information type data, images, audios and videos, monitoring devise, sensors and the like.

In particular, the step that the RMS 101 edits the introduced original resource comprises: editing the resources in different network systems to be the resource metadata which is suitable for the convergence service system, wherein the resource metadata comprises two characteristics, namely the single-network service and the multi-network service. The resource metadata with the single-network service characteristic is suitable for providing resource for the single service system, and the resource metadata with the multi-network service characteristic is suitable for providing resource for the multi-network convergence service. For example, introducing a 1080P (1920*1080) movie, generating the file of three video display formats which are respectively 720P (1280*720), CIF 9352*288) and QCIF (176*144) after editing the movie, thus, the resource metadata contains information of four display formats which are respectively 1080P (1920*1080), 720P (1280*720), CIF (9352*288) and QCIF (176*144), and can provide resource for the multi-network convergence service, wherein, 1080P (1920*1080) and 720P (1280*720) are suitable for being used on the computers and set-top boxes of the Internet and cable television network; CIF (352*288) and QCIF (176*144) are suitable for being used on the mobile phone terminals of the telecommunication network. It should be noted that, the resource metadata generally needs to be packaged, and the packaged resource metadata is synchronized to the OMS. The packaged resource metadata is the link for associating the RMS and the OMS.

In particular, the step that the RMS 101 arranges and manages the resource is to display the resource metadata on different user portals according to the specific service demands. The display mode of the resource metadata is dynamically adjusted according to the service development demands, so as to be helpful for spreading the multi-network convergence service. Such arrangement not only can set individual display mode for a specific service, but also can provide public utilization paths for the multi-network convergence service. For example, the IPTV services over the cable television network are provided for the user via the mode of column, program, album and the like; thus the level of the column can be flexibly established via the resource arrangement, and the relation between the program and the column can be associated. For the multi-network convergence service, a public access path can be established via resource arrangement, so as to be used when different service systems access the convergence service.

In particular, the step that the RMS 101 manages the resource work flow refers to verify the legality, quality and arrangement information of the resource metadata. Only the successfully-verified resources can enter into the corresponding service system to be used by the users, and for the unsuccessfully-verified resources, it is needed to re-edit the original resource. It should be noted that, the verification step is selectable.

In particular, the step that the RMS 101 synchronizes the resource data comprises two parts: one part is to synchronize the resource metadata to the OMS 102; and the other part is to synchronize the resource metadata arrangement information to the UPS 104.

The OMS 102 is configured to take charge of the management for the multi-network service operation, wherein the management comprises the service charging management, service certification and authentication, and the like.

In particular, the step that the OMS 102 implements management for the multi-network service refers to convergence the service information which needs to be managed in the convergence service system, including different services of different networks.

In particular, the step that the OMS 102 implements the service charging management comprises the product management, the charging strategy management and the like in the service operation, wherein the product containing the charging strategy is the metadata of the operation management, which can provide rich service strategies for the operators or the service providers.

In particular, the step that the OMS 102 implements the service certification and authentication is to implement certification for the user access and implement authentication for the service utilization, guarantee that the user can access the legal service resource.

After the RMS 101 synchronizes the resource metadata to the OMS 102, the OMS 102 establishes the associated relation between the product metadata and the resource metadata. Thus, the resource management and the operation management can be correspondingly independent, and the resource display and the service operation can be separated. The resource display mode can be dynamically adjusted by the resource arrangement according to the service development demands. Such adjustment is irrelative to the service operation, and just because the adjustment is irrelative to the service operation, the unified management of the resources becomes possible at the same time.

In addition, after the resource metadata in the RMS 101 is synchronized to the OMS 102 and the OMS 102 establishes the associated relation of the metadata, the OMS 102 can further synchronize the resource metadata to the SES 103, and the service engine in the SES 103 can provide service for the user according to the resource metadata.

The SES 103 is configured to provide service capacity access for the multi-network service system, so as to realize the distribution and scheduling of the service and the global load balance.

The SES 103 generally comprises a plurality of service engines, wherein each service engine provides the corresponding service capacity access. Different service engines can provide the same service capacity, and also can provide the service capacities on different networks. The SES can realize the distribution scheduling and global load balance of all the service engines.

In particular, the step that the SES 103 realizes the distribution and scheduling of all the service engines comprises: judging which service capacity is used by the user according to the user access type, distributing the user request to the corresponding service engine, and making the service engine provide service.

In particular, the step that the SES 103 realizes the global load balance of all the service engines comprises: judging which service capacity is used by the user according to the user access type; for the user using the same service capacity, the user request is loaded to the correspondingly idle service engine according to the idle state of the service engine, and the service engine provides the service.

The UPS 104 is configured to provide a user display portal for the multi-network service.

The UPS 104 generally comprises a plurality of user portals (service portals), wherein each user provides the corresponding service display. For different user terminals, different user portals are provided for the user to use. For example, for the IPTV service, the Electronic Program Guide (EPG) is provided for the cable television network to use; and for the mobile phone film and television, the Wireless Application Protocol (WAP) portal is provided for the mobile phone terminal to use.

After the RMS 101 synchronizes different service arrangement information to the UPS 104 according to the result of resource arrangement management, the UPS 104 can provide the corresponding display modes according to different user terminals.

Upon the user requests the service, the UPS receives the service utilization request from the user, and notifies the SES; the SES loads the service utilization request to the corresponding service engine thereof, and the service engine requests the certification and authentication from the OMS; after the certification and the authentication are successful, the service engine provides the service for the user.

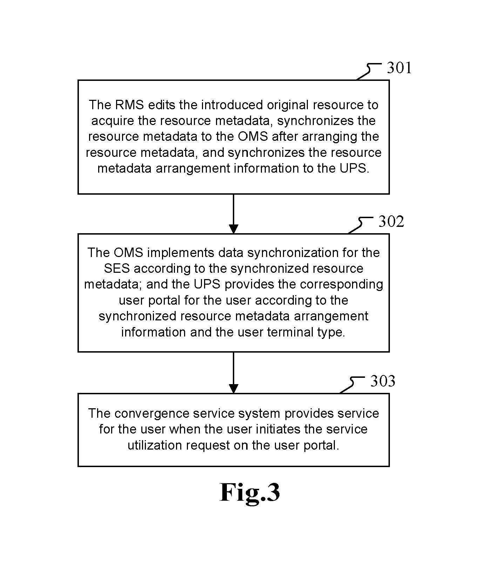

Fig. 3 shows a flow diagram of a convergence service implementing method according to an embodiment of the present invention; as shown in Fig. 3, the convergence service implementing method comprises:
Step 301: after editing the introduced original resource to acquire the resource metadata and arranging the resource metadata, the RMS of the convergence service system synchronizes the resource metadata to the OMS of the convergence service system, and synchronizes the resource metadata arrangement information to the UPS of the convergence service system.
Step 302: The OMS implements data synchronization for the SES of the convergence service system according to the resource metadata which is synchronized by the RMS, the UPS provides the corresponding user portal for the user according to the resource metadata arrangement information and the user terminal type which are synchronized by the RMS.
Step 303: The convergence service system provides service for the user when the user initiates the service utilization request on the user portal.

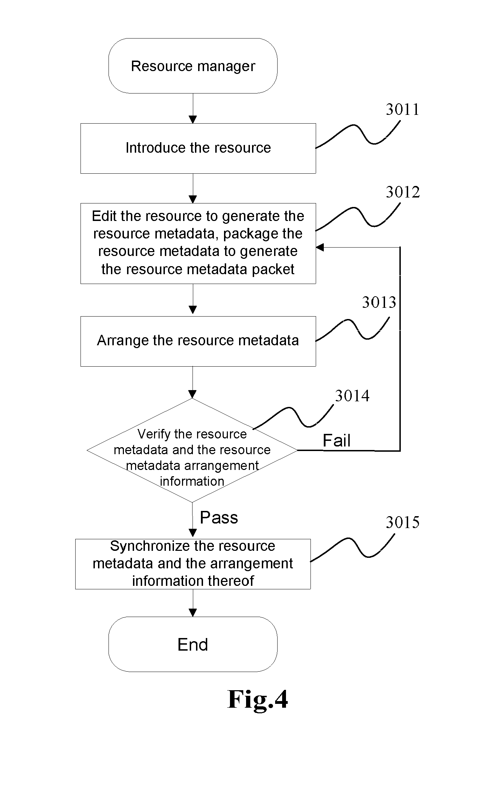

Fig. 4 shows a specific flow diagram of Step 301. As shown in Fig. 4, the Step 301 specifically comprises the following steps.

Step 3011: the RMS introduces the original resources from different networks.

In the above, the original resources comprise the information of the multi-network service such as the information type data, images, audios and videos, monitoring services, sensors and the like; and the introduction of the original resources is the basis of the unified management.

Step 3012: The RMS edits the introduced original resources to be resource metadata which is suitable for the demands of the convergence service system.

In the above, the resource metadata comprises two characteristics, namely the single-network service and the multi-network service. The resource metadata with the single-network service characteristic is suitable for providing resources for the single service, and the resource metadata with the multi-network service characteristics is suitable for providing resources for the multi-network convergence service.

In addition, the RMS needs to package the resource metadata, and the packaged resource metadata packet is the link for associating the RMS and the OMS. The step for synchronizing the resource metadata to the OMS comprises: synchronizing the packaged resource metadata to the OMS.

Step 3013: The RMS implements arrangement management for the resources, namely, the RMS displays the resource metadata on different user portals according to the specific service demands.

The display mode of the resource metadata needs to be dynamically adjusted according to the service development demands, which is helpful for spreading the multi-network convergence service. Such arrangement not only can set the individual display mode for a specific service, but also can provide the public utilization path for the multi-network convergence service.

Step 3014: The RMS verifies the resource metadata and the arrangement information thereof; if the verification is successful, executing the Step 3015; otherwise, returning to Step 3012, and re-editing the original resource.

The verification for the resource metadata and the arrangement information thereof is to verify the legality, quality and arrangement information of the resource, and only the resources which pass the verification can enter into the corresponding service system to be used by the user.

It should be noted that, the step 3014 is selectable.

Step 3015: The RMS implements data synchronization for the resources.

In the above, the data synchronization for the resources comprises two parts: one part is to synchronize the resource metadata (generally referring to the packaged resource metadata) to the OMS, and the other part is to synchronize the resource metadata arrangement information to the UPS.

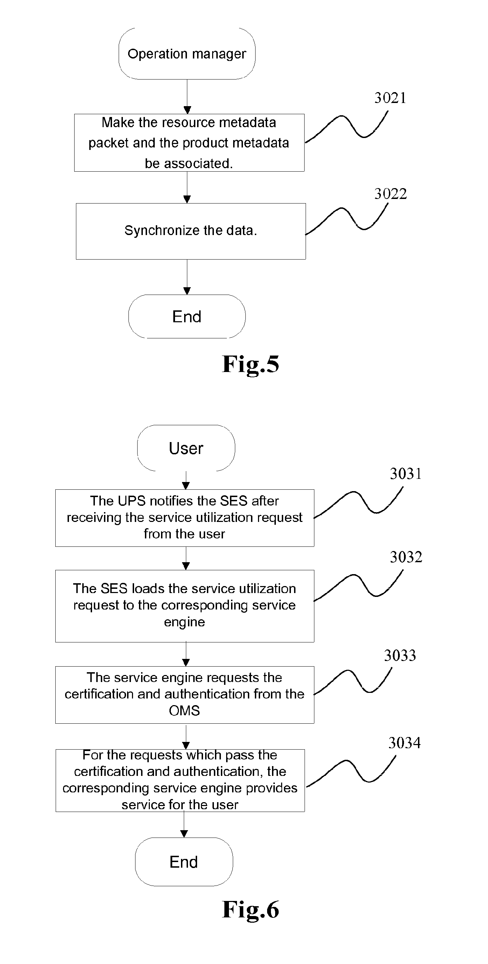

Fig. 5 shows a flow diagram illustrating the Step 302 of the OMS implements data synchronization for the SES according to the resource metadata which is synchronized by the RMS. As shown in Fig. 5, the step of the OMS implements data synchronization for the SES according to the resource metadata which is synchronized by the RMS comprises the following steps.

Step 3021: the operator manager makes the resource metadata packet which is synchronized by the RMS and the product metadata be associated in the OMS.

Step 3022: The OMS synchronizes the operation system service data, resource metadata, product metadata and the like to the SES.

Fig. 6 shows a flow diagram illustrating convergence the Step 303 of the convergence service system provides service for the user. As shown in Fig. 6, the step of the convergence service system provides service for the user comprises the following steps.

Step 3031: the UPS notifies the SES after receiving the service utilization request from the user.

Step 3032: The SES loads the service utilization request to the corresponding service engine.

Step 3033: The service engine requests the certification and authentication from the OMS.

Step 3034: For the request which passes the certification and authentication, the corresponding service engine provides service for the user.

It can be seen that, compared with a conventional convergence service system, the present invention has the following advantages.
1) Loose coupling of resource display and service operation. As the resource display and service operation of the conventional convergence service system are tightly coupled, the change of the resource and the change of the service operation strategy are mutually influenced, and the relation of the tight coupling is quite hard to support the flexible and changeable cross-network convergence service.
2) It is convenient to share the resource. The loose coupling of the resource display and the service operation provides excellent conditions for the unified management of the multi-network convergence service, and the unified management of the resources is helpful for sharing resources of the multi-network convergence service.
3) The unified management of operation can be realized. The loose coupling of the resource display and the service operation also provides conditions for the unified management of operation, and the unified management of the operation is helpful for implementing the unified management, unified charging, unified certification and unified authentication.
4) The unified management of resources and operations creates the condition for developing the cross-network deep-level convergence service.

The above is only the preferred embodiments of the present invention and not intended to limit the scope of protection of the present invention.

## Claims

1. A convergence service system, **characterized in that** the system comprises: a Resource Management Subsystem (RMS), an Operation Management Subsystem (OMS), a Service Engine Subsystem (SES) and a User Portal Subsystem (UPS); wherein,
the RMS is configured to take charge of management of a multi-network service resource, which comprises: introducing an original resource; editing the introduced original resource to acquire a resource metadata, arranging the edited resource metadata, synchronizing the resource metadata to the OMS, and synchronizing the resource metadata arrangement information to the UPS;
the OMS is configured to establish an associated relation between a product metadata and the resource metadata after the RMS synchronizes the resource metadata to the OMS, and then synchronize the resource metadata to the SES;
the SES is configured to provide service capacity access, so as to realize distribution and scheduling of the service and the global load balance; and
the UPS is configured to provide a corresponding user portal for the user according to the resource metadata arrangement information which is synchronized by the RMS and a user terminal type.

2. The system according to claim 1, **characterized in that** the resource metadata acquired by the RMS comprises two characteristics which are a single-network service and a multi-network service.

3. The system according to claim 1, **characterized in that** the RMS is further configured to package the acquired resource metadata, and synchronize the packaged resource metadata to the OMS.

4. The system according to claim 1, **characterized in that** the RMS is further configured to verify the resource metadata and the resource metadata arrangement information, and implement following synchronization flow if the verification is successful; otherwise, re-edit the original resource.

5. The system according to any one of claims 1 to 4, **characterized in that**
the UPS is further configured to receive a service utilization request from the user, and notify the SES of the service utilization request;
the SES is further configured to load the service utilization request to a corresponding service engine of the SES, and make the service engine request certification and authentication from the OMS; and make the service engine provide service for the user if the certification and authentication are successful; and
the OMS is further configured to implement the corresponding certification and authentication and return a certification and authentication response according to the request of the service engine in the SES.

6. The system according to claim 1, **characterized in that**
the OMS is further configured to take charge of the management for the multi-network service operation, which comprises charging management of the service, and the certification and authentication of the service.

7. A convergence service implementing method, **characterized in that** the method comprises:
after editing introduced original resource to acquire resource metadata, and arranging the resource metadata, Resource Management Subsystem (RMS) of convergence service system synchronizing the resource metadata to Operation Management Subsystem (OMS) of the convergence service system, and synchronizing resource metadata arrangement information to User Portal Subsystem (UPS) of the convergence service system;
the OMS implementing data synchronization for Service Engine Subsystem (SES) of the convergence service system according to the resource metadata which is synchronized by the RMS, and the UPS providing corresponding user portal for the user according to the resource metadata arrangement information which is synchronized by the RMS and a user terminal type; and
the convergence service system providing service for the user when the user initiates service utilization request on the user portal.

8. The method according to claim 7, **characterized in that** the resource metadata comprises two characteristics which are a single-network service and a multi-network service.

9. The method according to claim 7, **characterized in that** after the RMS acquires the resource metadata, the method further comprises: the RMS packaging the acquired resource metadata,
wherein the step of synchronizing the resource metadata to the OMS comprises: synchronizing the packaged resource metadata to the OMS.

10. The method according to claim 7, **characterized in that** before the RMS implementing data synchronization, the method further comprises: the RMS verifying the resource metadata and the resource metadata arrangement information, implementing the following synchronization flow if the verification is successful; otherwise, re-editing the original resource.

11. The method according to any one of claims 7 to 10, **characterized in that** the step of the convergence service system providing service for the user comprises:
the UPS notifying the SES after receiving the service utilization request from the user;
the SES loading the service utilization request to corresponding service engine;
the service engine requesting certification and authentication from the OMS; and
the service engine providing service for the user if the certification and authentication are successful.

12. The method according to claim 7, **characterized in that** the method further comprises: the OMS taking charge of the management for the multi-network service operation, which comprises charging management of the service, and the certification and authentication of the service.
